# EUROPÄISCHE PATENTSCHRIFT

(11) **EP 1 137 557 B1**
(45) Veröffentlichungstag und Bekanntmachung des Hinweises auf die Patenterteilung: **31.03.2004**
(21) Anmeldenummer: 99963340.7
(22) Anmeldetag: 29.11.1999
(51) Int. Cl.: B60S 1/24

(54) **SCHEIBENWISCHERANLAGE**
WINDSCREEN WIPER SYSTEM
SYSTEME D'ESSUIE-GLACE

(30) Priorität: 10.12.1998 DE 19857080
(43) Veröffentlichungstag der Anmeldung: 04.10.2001
(73) Patentinhaber: Volkswagen Aktiengesellschaft, 38436 Wolfsburg (DE)
(72) Erfinder: OSTROWSKI, Wolfgang, D-38446 Wolfsburg (DE)
(86) Internationale Anmeldenummer: PCT/EP1999/009244
(87) Internationale Veröffentlichungsnummer: WO 2000/034087

(56) Entgegenhaltungen:
- GB-A- 853 835
- GB-A- 932 728
- US-A- 3 139 643

## Beschreibung

Die Erfindung betrifft eine Scheibenwischeranlage für Kraftfahrzeuge mit zwei gleichsinnig drehenden Wischerblättern, die über ein Kurbelgelenkgetriebe angetrieben werden.

Eine Scheibenwischeranlage an der Front- oder Heckscheibe von Kraftfahrzeugen mit zwei gleichzeitig und gegensinnig drehenden Wischerblättern, die gegeneinander versetzt angeordnet und über ein Kurbelgelenkgetriebe angetrieben sind, ist aus DE-C-42 20 673 bekannt. Bei der genannten Scheibenwischeranlage ist am freien Ende einer von einem Motor angetriebenen Kurbel ein Exzenterbolzen derart angeordnet, daß in der Wischerausgangslage der Antriebsmittelpunkt des Motors einerseits mit dem Mittelpunkt des mit der Kurbelstange gelenkig verbundenen Exzenterbolzens und mit dem Mittelpunkt des Gelenkes Kurbelstange/Wischerarm und andererseits mit dem Mittelpunkt des Gelenkes Kurbel/Kurbelstange und mit den Mittelpunkten des Gelenkes Kurbelstange/Winkelhebel je eine Gerade bilden.

Bei einer solchen Scheibenwischeranlage ist jedoch die Position des Antriebskreises durch die beiden Wischer festgelegt. Die Anordnung des Antriebsmotors ist also in engen Grenzen vorgegeben, so daß der Einbau der Scheibenwischeranlage in das Fahrzeug zu Konflikten mit der Anordnung weiterer Aggregate unter den Scheiben des Fahrzeugs führen kann. Eine unabhängige Positionierung der Wischer wäre nur mit zwei einzelnen Antriebsmotoren möglich, was aber erhöhten Aufwand und Kosten zur Folge hätte.

Es ist Aufgabe der Erfindung, eine Scheibenwischeranlage zu schaffen, die unabhängig von der Position der Wischer eingebaut werden kann, d.h. bei der eine nahezu beliebige Achsstellung der Wischeranlage möglich ist, und die kostengünstig und einfach einzubauen ist.

Die Aufgabe wird durch eine Scheibenwischeranlage mit den Merkmalen nach Anspruch 1 gelöst. Bevorzugte Ausführungsformen der Erfindung sind Gegenstand der Unteransprüche.

Der Erfindung liegt die Idee zugrunde, eine Arbeitsstange vorzusehen, die durch ihre Formgebung einen Antriebskreis abweichend von dem des Wischermotors erzeugt und als Antriebsglied für weitere Arbeitsstangen dient. Die erfindungsgemäße Scheibenwischeranlage für Kraftfahrzeuge mit zwei gleichsinnig drehenden Wischerblättern, die über ein Kurbelgelenkgetriebe angetrieben werden, ist dadurch gekennzeichnet, daß am freien Ende einer von einem Motor angetriebenen Kurbel ein Verbindungsglied beweglich an einem ersten Befestigungspunkt des Verbindungsgliedes angeordnet ist, eine erste Antriebsstange an dem ersten Befestigungspunkt fest mit dem Verbindungsglied verbunden ist und eine zweite Antriebsstange an einem zweiten Befestigungspunkt, der sich an dem freien Ende des Verbindungsgliedes befindet, beweglich mit dem Verbindungsglied verbunden ist.

Vorzugsweise sind die Kurbel des Motors und die Antriebsstange über ein Kugelgelenk miteinander verbunden, wobei eine Kugel mit der Antriebsstange fest verbunden ist, so daß sie seitlich von der Antriebsstange angeordnet ist, und eine Kugelaufnahme zur Aufnahme der Kugel in der Kurbel integriert ist.

Ein Vorteil der erfindungsgemäßen Scheibenwischeranlage ist dabei, daß sie einfach im Aufbau ist und nahezu beliebig positioniert werden kann.

Weitere Merkmale und Vorteile der Erfindung ergeben sich aus der folgenden Beschreibung bevorzugter Ausführungsformen der Erfindung, wobei Bezug genommen wird auf die beigefügten Zeichnungen.
- Fig. 1: zeigt eine Ausführungsform der erfindungsgemäßen Scheibenwischeranlage in perspektivischer Ansicht.
- Fig. 2a und 2b: zeigen die wesentlichen Bewegungslinien einer Scheibenwischeranlage mit zwei Wischern nach dem Stand der Technik bzw. gemäß der Erfindung.
- Fig. 3: zeigt eine Ausführungsform der gelenkigen Verbindung zwischen der Kurbel und der Antriebsstange im Querschnitt.

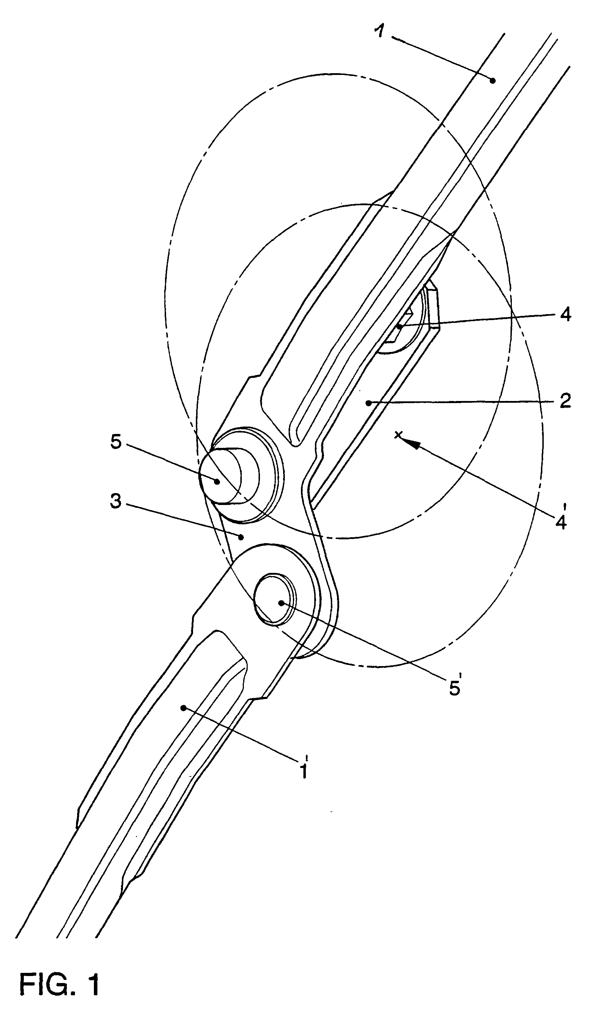

In Fig. 1 ist eine schematische Darstellung einer Scheibenwischeranlage für Kraftfahrzeuge mit zwei gleichsinnig drehenden Wischerblättern. Die (nicht dargestellten) Wischerblätter werden über ein Kurbelgelenkgetriebe angetrieben. Dazu sind sie jeweils über eine Antriebsstange 1 und 1' mittelbar mit einer Kurbel 2 des (nicht dargestellten) Antriebsmotors verbunden. Die Kurbel kann dabei eine einfache Kurbel oder eine Kreisscheibe sein. Bei dem Aufbau der erfindungsgemäßen Scheibenwischeranlage ist zwischen jeder Antriebsstange und der Kurbel vom Antriebsmotor ein Verbindungsglied 3 vorgesehen. Das Verbindungsglied 3 ist am freien Ende bzw. am Rand der Kurbel 2 beweglich angeordnet. Die Befestigung des Verbindungsgliedes 3 an der Kurbel 2 erfolgt an einem ersten Befestigungspunkt 5 an einem Ende des Verbindungsgliedes 3. An dem ersten Befestigungspunkt 5 ist außerdem die erste Antriebsstange 1 fest mit dem Verbindungsglied 3 befestigt. Die zweite Antriebsstange 1' ist beweglich mit dem Verbindungsglied 3 an einem zweiten Befestigungspunkt 5' verbunden. Der zweite Befestigungspunkt 5' befindet sich an dem freien Ende des Verbindungsgliedes 3.

Der erste Befestigungspunkt 5 beschreibt beim Antrieb der Kurbel 2 durch den Antriebsmotor einen Kreis, dessen Mittelpunkt 4 die Motorachse bildet. Dagegen beschreibt der zweite Befestigungspunkt 5' einen Kreis, dessen Mittelpunkt 4' gegenüber dem ersten Mittelpunkt 4 versetzt ist. Mit dem erfindungsgemäßen Aufbau wird die Kreisbewegung des Antriebsmotors also in zwei Kreisbewegungen mit einem ersten bzw. einem zweiten Kreismittelpunkt 4 und 4' umgesetzt, ohne daß das Antriebsgelenk der Scheibenwischeranlage in irgendeiner Stellung blockiert wird. Damit sind die Achsen der beiden Antriebskreise und also auch die Position der Wischer unabhängig voneinander.

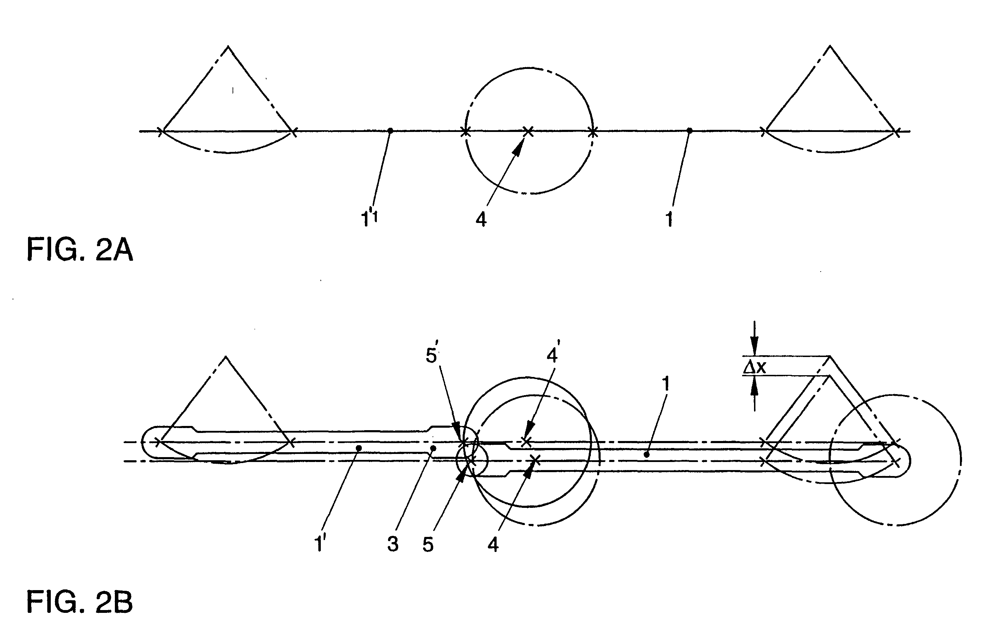

Der Unterschied zwischen dem Stand der Technik und der Erfindung ist dem Vergleich von Fig. 2A mit Fig. 2B zu entnehmen. In Fig. 2A ist die relative Anordnung des Antriebskreises, des ersten Wischers und des zweiten Wischers zueinander gezeigt. Wie aus Fig. 2A ersichtlich, liegen die beiden Wischer und der Antriebskreis in einer Linie. Eine Änderung der Position ist nur durch Drehung um den Mittelpunkt des Antriebskreises möglich. Eine unterschiedliche Positionierung der beiden Wischer in vertikaler Richtung zueinander ist nicht möglich. (Mit "vertikaler" Richtung ist hier die Richtung senkrecht zu der Verbindungslinie der beiden Wischer gemeint.)

Bei der Scheibenwischeranlage gemäß der Erfindung wird eine unterschiedliche Positionierung der beiden Wischer in vertikaler Richtung zueinander durch das erfindungsgemäße Verbindungsglied 3 erreicht. Wie in Fig. 2B dargestellt, wird ein Versatz eines der Wischer (in Fig. 2B der rechte Wischer) um Δx dadurch ermöglicht, daß die erste Antriebsstange 1 direkt an einem Befestigungspunkt 5 mit der Kurbel 2 verbunden ist und die zweite Antriebsstange 1' über das Verbindungsglied 3 mit der Kurbel 2 verbunden ist. Die Befestigungspunkte 5 und 5' beschreiben zueinander versetzte Kreise, d.h. Kreise mit den beiden nicht identischen Mittelpunkten 4 und 4'. Dadurch daß die Mittelpunkte 4 und 4' der Antriebskreise in der vertikalen Richtung voneinander getrennt sind, ergibt sich der gewünschte Versatz der beiden Wischer in vertikaler Richtung.

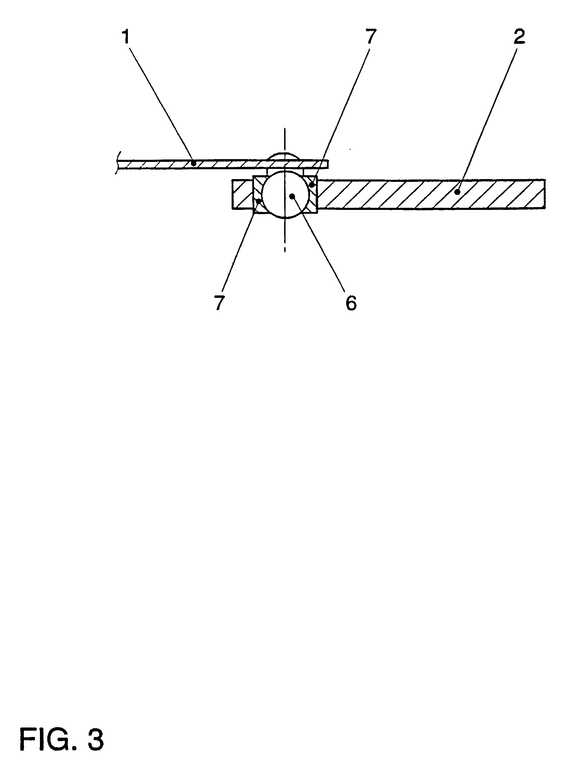

In Fig. 3 ist eine Ausführungsform der gelenkigen Verbindung zwischen Kurbel 2 und Antriebsstange 1 an dem Befestigungspunkt 5 im Querschnitt gezeigt. Um eine möglichst geringe Bauhöhe der Verbindung zwischen der Antriebsstange 1 und der Kurbel 2 zu erreichen, wird vorzugsweise die Kurbel 2 des Motors und die Antriebsstange 1 über ein Kugelgelenk miteinander verbunden. Das Kugelgelenk umfaßt eine Kugel 6 und eine Kugelaufnahme 7. Erfindungsgemäß ist die Kugel 6 mit der Antriebsstange 1 fest verbunden, so daß sie seitlich von der Antriebsstange 1 angeordnet ist. Die Kugelaufnahme 7 zur Aufnahme der Kugel 6 ist in der Kurbel 2 integriert. Die Befestigung der Antriebsstange 1' an dem Verbindungsglied 3 ist analog aufgebaut.

### BEZUGSZEICHENLISTE

- 1: erste Antriebsstange, 1' zweite Antriebsstange
- 2: Kurbel
- 3: Verbindungsglied
- 4: erster Kreismittelpunkt, 4' zweiter Kreismittelpunkt
- 5: erster Befestigungspunkt, 5' zweiter Befestigungspunkt
- 6: Kugel, gelagert in Kurbel
- 7: Kugelpfanne in Antriebsstange

## Patentansprüche

1. Scheibenwischeranlage für Kraftfahrzeuge mit zwei gleichsinnig drehenden Wischerblättern, die über ein Kurbeigelenkgetriebe angetrieben werden,
**dadurch gekennzeichnet, daß**
am freien Ende einer von einem Motor angetriebenen Kurbel (2) ein Verbindungsglied (3) an einem ersten Befestigungspunkt (5) des Verbindungsgliedes (3) beweglich angeordnet ist, eine erste Antriebsstange (1) an dem ersten Befestigungspunkt (5) fest mit dem Verbindungsglied (3) verbunden ist und eine zweite Antriebsstange (1') an einem zweiten Befestigungspunkt (5'), der sich an dem freien Ende des Verbindungsgliedes (3) befindet, beweglich mit dem Verbindungsglied (3) verbunden ist.

2. Scheibenwischeranlage nach Anspruch 1,
**dadurch gekennzeichnet, daß**
die Verbindung zwischen der Kurbel (2) und der Antriebsstange (1) ein Kugelgelenk umfaßt, wobei eine Kugel (6) mit der Antriebsstange (1) fest verbunden ist, so daß sie seitlich von der Antriebsstange (1) angeordnet ist, und eine Kugelaufnahme (7) zur Aufnahme der Kugel (6) in der Kurbel (2) integriert ist.

3. Scheibenwischeranlage nach Anspruch 1 oder 2,
**dadurch gekennzeichnet, daß**
die Verbindung zwischen dem Verbindungsglied (3) und der Antriebsstange (1') ein Kugelgelenk umfaßt, wobei eine Kugel (6) mit der Antriebsstange (1') fest verbunden ist, so daß sie seitlich von der Antriebsstange (1') angeordnet ist, und eine Kugelaufnahme (7) zur Aufnahme der Kugel (6) in dem Verbindungsglied (3) integriert ist.

## Claims

1. Windscreen wiper system for motor vehicles, with two wiper blades rotating in the same direction, which are driven via a crank link mechanism, **characterized in that** a connecting element (3) is, at a first attachment point (5) of the connecting element (3), arranged movably at the free end of a crank (2) driven by a motor, a first drive rod (1) is connected firmly to the connecting element (3) at the first attachment point (5), and a second drive rod (1') is connected movably to the connecting element (3) at a second attachment point (5') which is located at the free end of the connecting element (3).

2. Windscreen wiper system according to Claim 1, **characterized in that** the connection between the crank (2) and the drive rod (1) comprises a ball joint, a ball (6) being connected firmly to the drive rod (1), so that it is arranged at the side of the drive rod (1), and a ball receptacle (7) for receiving the ball (6) being integrated in the crank (2).

3. Windscreen wiper system according to Claim 1 or 2, **characterized in that** the connection between the connecting element (3) and the drive rod (1') comprises a ball joint, a ball (6) being connected firmly to the drive rod (1'), so that it is arranged at the side of the drive rod (1'), and a ball receptacle (7) for receiving the ball (6) being integrated in the connecting element (3).

## Revendications

1. Système d'essuie-glace pour véhicules automobiles comportant deux lames d'essuyage tournant dans le même sens qui sont entraînées par un engrenage à articulation à manivelle,
**caractérisé en ce**
**qu'**à l'extrémité libre d'une manivelle entraînée par un moteur (2), un élément de liaison (3) est disposé de manière mobile sur un premier point de fixation (5) de l'élément de liaison (3), qu'une première bielle de commande (1) est, au premier point de fixation (5), reliée fixement à l'élément de liaison (3) et qu'une deuxième bielle de commande (1') est, à un deuxième point de fixation (5') qui se trouve à l'extrémité libre de l'élément de liaison (3), reliée de manière mobile à l'élément de liaison (3).

2. Système d'essuie-glace selon la revendication 1,
**caractérisé en ce que**
la liaison entre la manivelle (2) et la bielle de commande (1) comprend un joint à rotule, une rotule (6) étant reliée fixement à la bielle de commande (1), de manière à être disposée à côté de la bielle de commande (1), et qu'un support de rotule (7) destiné à recevoir la rotule (6) est intégré dans la manivelle (2).

3. Système d'essuie-glace selon la revendication 1 ou 2,
**caractérisé en ce que**
la liaison entre l'élément de liaison (3) et la bielle de commande (1') comprend un joint à rotule, une rotule (6) étant reliée fixement à la bielle de commande (1'), de manière à être disposée à côté de la bielle de commande (1'), et qu'un support de rotule (7) destiné à recevoir la rotule (6) est intégré dans l'élément de liaison (3).
